# EUROPÄISCHE PATENTSCHRIFT

(11) **EP 3 810 345 B1**
(45) Veröffentlichungstag und Bekanntmachung des Hinweises auf die Patenterteilung: **02.04.2025**
(21) Anmeldenummer: 20700905.1
(22) Anmeldetag: 16.01.2020
(51) Int. Cl.: B21B 39/14

(54) **VORRICHTUNG UND VERFAHREN ZUM TRANSPORTIEREN VON BANDMATERIAL, INSBESONDERE WARMBAND**
DEVICE AND METHOD FOR TRANSPORTING STRIP MATERIAL, IN PARTICULAR A HOT STRIP
DISPOSITIF ET PROCÉDÉ POUR LE TRANSPORT DE MATÉRIAU EN BANDE, EN PARTICULIER DE FEUILLARD À CHAUD

(30) Priorität: 21.02.2019 DE 102019202395; 18.11.2019 DE 102019217682
(43) Veröffentlichungstag der Anmeldung: 28.04.2021
(73) Patentinhaber: SMS group GmbH, 41069 Mönchengladbach (DE)
(72) Erfinder: HOLZHAUER, Thomas, 57399 Kirchhundem (DE); CRAMER, Ulrich, 57439 Attendorn (DE); KASTNER, Andreas, 57399 Kirchhundem (DE); TREUDE, Magnus, 57319 Bad Berleburg (DE)
(74) Vertreter: Kross, Ulrich
(86) Internationale Anmeldenummer: PCT/EP2020/050970
(87) Internationale Veröffentlichungsnummer: WO 2020/169278

(56) Entgegenhaltungen:
- WO-A1-2018/219946
- JP-A- S5 350 039
- ANONYMOUS: "Eco Slide Disc Operation time extended by a factor of ten", SIEMENS VAI, 1 March 2014 (2014-03-01), XP055478703

## Beschreibung

Die Erfindung betrifft eine Vorrichtung und ein Verfahren zum Transportieren von Bandmaterial, insbesondere Warmband, nach dem Oberbegriff von Anspruch 1.

Die Herstellung von Metallbändern und ihr Transport durch Transportvorrichtungen in einer vorbestimmten Transportrichtung über eine vorbestimmte Strecke sind bekannt. Die Rollgänge bringen die Metallbänder zu Bearbeitungsmaschinen für die Nachbearbeitung oder zu Haspelvorrichtungen zum Zwischenlagern. Damit die Bänder nicht seitlich von den Rollgängen rutschen, sind an den Rollgängen seitliche Führungen vorgesehen, die die Metallbänder auf den Rollgängen halten. Insbesondere beim Aufwickeln ist es erforderlich, die Metallbänder genau auszurichten, auch seitlich, um den Versatz der einzelnen Windungen des Metallbandes auf der Haspel so gering wie möglich zu halten und eine gleichmäßige Seitenfläche zu erreichen. Damit müssen die seitlichen Führungen die Metallbänder relativ eng führen.

Vorrichtungen zur seitlichen Führung von Metallbändern auf Rollgängen sind in der Regel halbhohe Seitenwände, die auch als Seitenführungslineale bezeichnet werden. Diese Seitenführungslineale sind mit feststehenden Verschleißplatten versehen. Die Verschleißplatten sind hohem Verschleiß ausgesetzt, da die Kanten der laufenden Metallbänder auf den Rollgängen mehr oder weniger tiefe Riefen in die Verschleißplatten graben. Dabei tritt der Verschleiß bei den feststehenden Verschleißplatten im Wesentlichen immer an derselben Stelle auf, und die Verschleißplatten müssen daher abhängig vom Nutzungsgrad wiederholt erneuert werden. Ein Austausch der Führungen ist jedoch nur in einem Anlagenstillstand möglich, und der Wartungsaufwand ist entsprechend groß.

Als Weiterentwicklung wurde daher in der DE 20 2014 011 026 U1 vorgeschlagen, bei einer Vorrichtung zur seitlichen Führung eines über eine Metallband-Fördervorrichtung laufenden Metallbandes zumindest einen kontrolliert in mehrere definierte Drehpositionen drehbaren Schleißkörper mit Schleißfläche vorzusehen, wobei die Schleißfläche im Wesentlichen plan und in allen definierten Drehpositionen parallel zu einer Führungsebene ist.

Jedoch wird unabhängig davon, wann die Drehung des Schleißteils erfolgt, der Verschleiß der Komponenten auch durch Drehen der Schleißteile nicht vollständig eliminiert, die Schleißteile werden letztendlich ungleichmäßig belastet. Außerdem hat diese Einrichtung den Nachteil, dass eine Drehung der Schleißteile nur dann möglich ist, wenn kein Band gegen das Schleißteil drückt: die Drehung kann also entweder nur zwischen zwei aufeinander folgenden Bändern oder bei Stillstand der Anlage erfolgen.

Aus WO 2015 / 043 926 A1 ist eine Scheibenseitenführung bekannt, bei der Verschleißscheiben ebenfalls schrittweise gedreht werden. Die Drehung der Verschleißscheiben erfolgt ausschließlich in den Walzpausen.

Die JPH05161917 schlägt vor, zur Vermeidung von Beschädigung des Metallbandes schirmförmige Rollen zur Führung an einem Seitenlineal zu verwenden, die durch einen Flüssigkeitsstrom in einer ständigen Drehbewegung gehalten werden. Bei Kontakt mit dem Walzgut werden diese Führungen durch Reibkraft unmittelbar die Walzgutgeschwindigkeit annehmen.

JPS60195106 zeigt kontinuierlich mitlaufende Scheiben, welche mit Walzgutgeschwindigkeit angetrieben werden, wobei die Umfangsgeschwindigkeit an der Kontaktfläche gleich der Transportgeschwindigkeit des Walzgutes ist.

Die JPS5350039 A beschreibt eine Scheibenseitenführung, deren Scheiben über je einen Motor synchron zur Transportgeschwindigkeit des Bandmaterials angetrieben werden. Die WO 2018/219946 A1 beschreibt eine Vorrichtung zur Führung von Metallbändern mit Schleißkörpern in einer Fertigstraße. Der Schleißkörper ist in mehrere Drehpositionen drehbar. Der Schleißkörper nimmt nacheinander eine Vielzahl von Drehpositionen ein, während er gedreht wird. Der Schleißkörper kann in einer gewünschten Drehposition, die er durch Drehen erreicht hat, fixiert werden, oder aber durch weiteres Drehen in eine weitere Drehposition gedreht werden, wobei das Drehen dabei auch sehr langsam erfolgen kann, beispielsweise eine Umdrehung in 12 Stunden.

Bei allen diesen bekannten Lösungen aus dem Stand der Technik verschleißen die feststehenden verstellbaren Verschleißkörper ausschließlich in dem begrenzten Kontaktbereich zwischen Walzgut und Führung. Dieser ungleichmäßige Verschleiß der Führungsfläche führt zu einer Funktionsbeeinträchtigung. Ein Austausch der Verschleißkörper ist in kurzen Intervallen notwendig. Die Anlagenverfügbarkeit sinkt durch die Wechselzeiten. Scheibenseitenführungen, welche in der Produktionspause mechanisch oder mit Schrittmotor verstellt werden, verschleißen punktuell in dem gleichen Bereich bis zur nächsten Verstellung. Bei den bekannten Lösungen mit kontinuierlich drehenden Scheiben nehmen diese spätestens mit Kontakt zum Walzgut durch Reibung die Transportgeschwindigkeit des Walzgutes an. Zwar wird dadurch der Verschleiß verringert, jedoch leidet die Qualität der Führung des Bandes darunter, weil die Reibkraft zwischen Walzgut und der zugaufbauenden Maschine, nämlich des Treibers oder der Haspel fehlt. Dieser Zustand tritt in Warmwalzwerken immer beim Verlassen des Bandendes aus dem letzten Fertiggerüst auf. Hierdurch wird die Wickelqualität des Bundes negativ beeinflusst wegen erhöhter Teleskopizität und verlaufender Wicklungen.

Ausgehend von dem genannten Stand der Technik stellt sich die Erfindung die Aufgabe, den Verschleiß von Führungselementen beim Transport von Warmbändern weiter zu minimieren und dadurch die Wartungsintervalle zu vergrößern.

Diese Aufgabe wird gelöst durch eine Vorrichtung zum Transportieren von Bandmaterial nach Anspruch 1 sowie ein Verfahren zum Transportieren von Bandmaterial nach Anspruch 9. Bevorzugte Ausführungsformen sind Gegenstand der jeweiligen Unteransprüche.

Transportvorrichtungen umfassen beispielsweise Überleitbleche oder Rollgänge, um mit ihrer Hilfe die Metallbänder über eine bestimmte Strecke zu transportieren. In gleicher Weise werden Metallbleche über eine bestimmte Strecke transportiert. Die Erfindung betrifft in gleicher Weise auch den Transport von Blechen, wobei aus Gründen der Einfachheit im Folgenden ausschließlich der Begriff des Bandmaterials verwendet wird, ohne einschränkend zu wirken.

Die Erfindung beruht auf der Überlegung, dass die Seitenführungselemente mit rotierenden Verschleißkörpern versehen werden. Die Verschleißkörper werden kontinuierlich gedreht, während die Bänder zum Haspel geführt werden. Hierdurch wird ein geringerer und gleichmäßiger Verschleiß an den Kontaktflächen erzeugt. Gleichzeitig wird die nutzbare Verschleißfläche an den Kontaktstellen zwischen Walzgut und Führung im Vergleich zu Verschleißkörpern, welche nicht verstellbar bzw. drehbar sind, vergrößert. Durch die Drehung der Verschleißkörper entsteht an der Kontaktfläche eine Reibkraft, welche der Transportrichtung des Bandes entgegenwirkt. Die Drehgeschwindigkeit der Verschleißkörper ist regelbar.

Gemäß einer ersten Alternative der Erfindung wird die Rotationsgeschwindigkeit der rotierenden Verschleißkörper in Abhängigkeit von der Walzgeschwindigkeit geregelt, jedoch immer so, dass die Umfangsgeschwindigkeit der Verschleißkörper kleiner ist als die Transportgeschwindigkeit des Walzguts. Insbesondere liegt die Winkelgeschwindigkeit der Verschleißkörperscheiben dabei in der Größenordnung von 0,5 bis 10 Umdrehungen pro Minute, bevorzugt 0,5 bis 5 Umdrehungen pro Minute.

In einer nicht erfindungsgemäßen Ausfürhrungsform wird die Winkelgeschwindigkeit der Verschleißkörper nach der Bandzugspannung geregelt. Insbesondere wenn ein Schwellenwert der Bandzugspannung z.B. nach Verlassen des Bandes aus dem Walzspalt unterschritten wird, kann die Winkelgeschwindigkeit in besonderer Weise eingestellt werden, so dass sich über die Reibung eine verbesserte Führung und ein geringerer Mittenverlauf des Bandes ergibt. Die Umfangsgeschwindigkeit liegt dann bei einem niedrigeren Wert als im normalen Betrieb.

Die Kontaktzeit je Fläche kann gemäß einer zweiten Alternative der Erfindung über die regelbare Drehgeschwindigkeit in Abhängigkeit von der Walzgutgeschwindigkeit beeinflusst werden. Mit der Rotation der Verschleißkörper ändert sich die Kontaktfläche kontinuierlich und damit auch der Verschleißbereich, so dass die Verschleißkörper über die Führungszeit effizienter genutzt werden.

Die Verschleißkörper sind lateral, d.h. in und entgegen der Richtung ihrer Rotationsachse ausfahrbar, so dass das Führen des Walzgutes über Positions- und Kraftregelung der Ausfahreinrichtung beeinflusst werden kann.

Unter dem Begriff "ausfahrbar" wird die laterale Positionierung insgesamt verstanden. Dabei sind die individuelle Positionierung von mindestens einem Verschleißkörper sowie die Positionierung von mindestens einem Verschleißkörper in Wirkverbindung gemeinsam mit dem Seitenführungselement gleichermaßen mit umfasst.

Verglichen mit dem Stand der Technik kann bei der erfindungsgemäßen Lösung ein kontinuierlicher und geringerer Verschleiß erwartet werden ohne die nachteiligen Führungseigenschaften aufgrund von fehlender Rückzugskraft, wie es bei den bekannten kontinuierlich mit Walzgutgeschwindigkeit drehenden Einrichtungen im Stand der Technik der Fall ist.

Die Größe der Verschleißkörper ist insbesondere von den Platzverhältnissen zwischen der Transportvorrichtung, insbesondere dem Rollgang, und Seitenführungselementen abhängig.

Weiterentwicklungen der Erfindung bestehen u.a. in einer Kühlung der Lineale durch eine Linealkühlung, einer Benetzung der sich drehenden Verschleißkörperscheiben mit Emulsion, einer zusätzlichen Kraftmessung direkt am Lineal und einer intelligenten Software für die Vorhersage des nächsten Wechsels der Verschleißkörperscheiben durch Analyse des bisherigen Verlaufs des aktuellen Walzprogramms.

Die Erfindung hat u.a. den Vorteil, dass sich durch die Wahl der Winkelgeschwindigkeit der Verschleißkörperscheiben die Kontaktzeit von Verschleißkörperscheibe und Band auf einen gewünschten Wert einstellen lässt. Zudem ist die Relativgeschwindigkeit zwischen Verschleißkörper und Walzgut bei der vorgeschlagenen Lösung niedriger als im Stand der Technik, was sich positiv auf den Verschleiß auswirkt.

Weitere Vorteile der Erfindung können darin gesehen werden, dass sich die Einsatzzeit der Führungen und somit Anlagenverfügbarkeit erhöht, auch weil aufgrund von gleichmäßigerem Verschleiß der Verschleißkörper weniger Reparaturarbeiten für den Einbau von Ersatzteilen anfallen. Ferner wird die Wickelqualität durch Rückzugskraft speziell am Bandende verbessert. Damit hängt auch die Reduzierung von Bandkantenbeschädigungen zusammen.

Weitere Merkmale und Vorteile der Erfindung ergeben sich aus der folgenden Beschreibung von bevorzugten Ausführungsformen, bei der Bezug genommen wird auf die beigefügte Zeichnung.
Fig. 1 zeigt eine Vorrichtung zum Herstellen und insbesondere Transportieren von Bandmaterial gemäß einer Ausführungsform der Erfindung in Draufsicht.
Fig. 2 zeigt das Blockschaltbild einer Regelung der Drehzahl der Verschleißkörper gemäß einer Ausführungsform der Erfindung.
Fig. 3 zeigt die Ausführungsform nach Fig. 1 in perspektivischer Ansicht.
Fig. 4 zeigt das Blockschaltbild einer Regelung der Druckerzeugung zum Ausfahren der Verschleißkörper gemäß einer Ausführungsform der Erfindung.

Die Zeichnung ist nicht maßstäblich und in einigen Bereichen werden Elemente hervorgehoben, um Funktionen zu betonen. Für gleiche oder gleich wirkende Elemente werden dieselben Bezugszeichnungen verwendet, soweit nichts anderes gesagt ist.

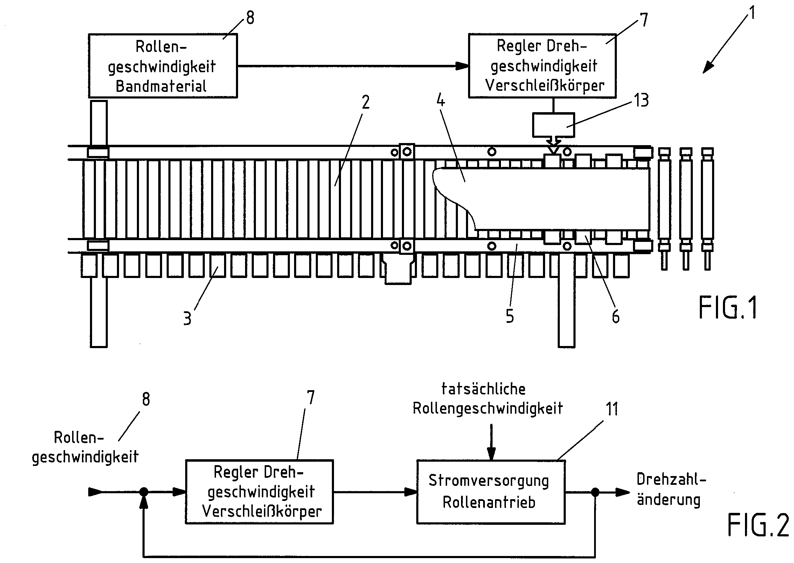

Fig. 1 zeigt einen Rollgang 1 mit Rollen 2, über die ein Bandmaterial 4 transportiert wird. Die Rollen 2 werden durch Motoren 3 angetrieben, so dass das Bandmaterial in der Darstellung von links nach rechts gebracht wird.

Um ein seitliches Herabfallen des Bandmaterials 4 von dem Rollgang 1 zu verhindern, ist der Rollgang mit Seitenführungselementen 5 versehen, die vorzugsweise beidseitig des Bandmaterials 4 insbesondere in Höhe des Rollgangs 1 mit seinen mehreren Rollen 2 angeordnet sind. Wie in der Einleitung beschrieben, sind diese Seitenführungselemente 5 jedoch einem erhöhten Verschleiß unterworfen. Um den Verschleiß durch das Bandmaterial 4 auf eine größere Fläche zu verteilen, sind an den Seitenführungselementen 5 auf beiden Seiten des Rollgangs 1 mehrere rotierende Verschleißkörper 6 angeordnet. Jeder der Verschleißkörper 6 ist um seine parallel zu den Rollen des Rollgangs liegende Symmetrieachse drehbar gelagert und wird durch einen Rotationsantrieb 13 in eine Drehbewegung um seine Symmetrieachse versetzt. Dabei kann jeder Verschleißkörper einen eigenen Rotationsantrieb aufweisen, oder ein Rotationsantrieb treibt mehrere oder alle Verschleißkörper an.

Die Drehgeschwindigkeit des Verschleißkörpers 6 wird erfindungsgemäß abhängig von der Vortriebsgeschwindigkeit des Bandmaterials 4 auf dem Rollgang 1 auf eine vorbestimmte Solldrehzahl geregelt. Dazu umfasst die Vorrichtung einen Sensor 8 für die Rollendrehgeschwindigkeit. Dessen Ausgangssignal , welches die Rollendrehgeschwindigkeit repräsentiert, dient als Führungsgröße einer Drehzahlreglereinrichtung 7 für den Verschleißkörper.

Alternativ wird die Drehgeschwindigkeit des Verschleißkörpers 6 abhängig von einer Kontaktzeit je Fläche mit dem Bandmaterial auf eine vorbestimmte Solldrehzahl geregelt. In diesem Fall umfasst die Vorrichtung einen nicht dargestellten Sensor für die Kontaktzeit zwischen Verschleißkörper und Bandmaterial. In Abhängigkeit von dieser Kontaktzeit wird die Geschwindigkeit des Verschleißkörpers gewählt, d.h. die Kontaktzeit wird als Führungsgröße der Drehzahlreglereinrichtung verwendet.

In beiden Fällen wird die Drehgeschwindigkeit des Verschleißkörpers jedoch so geregelt, dass die Umfanggeschwindigkeit des Verschleißkörpers kleiner oder gleich der Vortriebsgeschwindigkeit des Bandmaterials auf dem Rollgang ist. Insbesondere hat sich eine Winkelgeschwindigkeit der Verschleißkörper in der Größenordnung von 0,5 bis 10 Umdrehungen pro Minute, bevorzugt 0,5 bis 5 Umdrehungen pro Minute als optimal herausgestellt.

Die Regelung der Drehgeschwindigkeit der Verschleißkörper ist in Fig. 2 zusammengefasst. Der Regler 7 liest als Führungsgröße das Ausgangssignal eines Sensors 8 für die Rollengeschwindigkeit des Rollgangs 1. Der Regler 7 gibt in Abhängigkeit von der Rollengeschwindigkeit ein Stellgrößesignal an eine Stromversorgung 11 für den Rotationsantrieb des Verschleißkörpers. Je nach Störgröße bzw. tatsächlicher Rollengeschwindigkeit des Rollgangs 1 resultiert eine Drehzahländerung für den Antrieb der Verschleißkörper, so dass die Drehzahl des Verschleißkörpers immer an die Rollengeschwindigkeit des Rollgangs angepasst wird. Vorzugsweise ist der Rotationsantrieb für den wenigstens einen Verschleißkörper ein Elektromotor.

In einer weiteren Ausführungsform wird die Drehgeschwindigkeit der Verschleißkörper 6 abhängig von einem gemessenen Bandzug auf eine vorbestimmte, bevorzugt reduzierte Solldrehzahl geregelt. Bei Unterschreiten eines definierten Schwellenwertes des Bandzuges, z.B. wenn das Band das letzte Walzgerüst verlässt, wird die Solldrehzahl so gesenkt, dass sich durch die Reibung eine Erhöhung des Bandzuges ergibt.

Diese Regelung kann mit einer oder beiden vorgenannten Regelungen verknüpft oder überlagert werden.

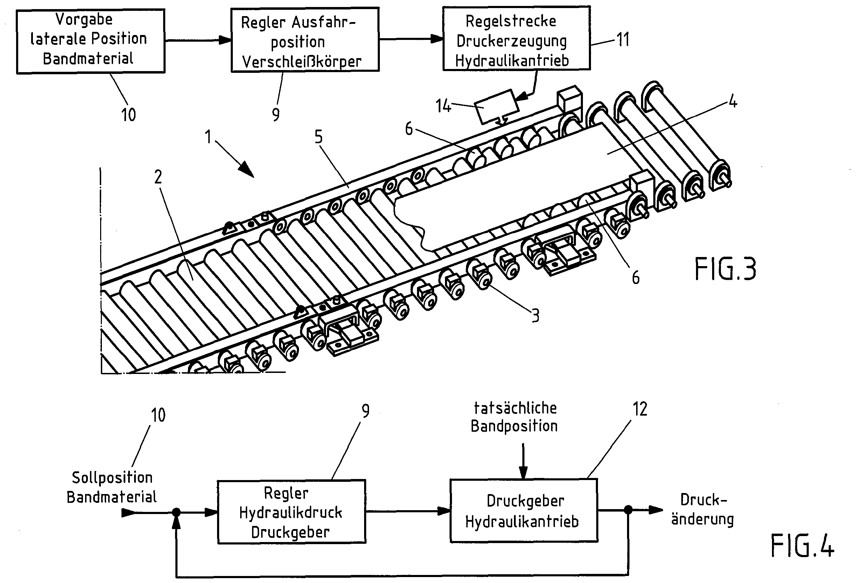

Über die regelbare Einstellung der Drehgeschwindigkeit der Verschleißkörper 4 hinaus wird auch die laterale Position des Bandmaterials 4 auf dem Rollgang 1 auf eine vorbestimmte Sollposition geregelt. Dazu umfasst die Vorrichtung eine Positionsreglereinrichtung 9 zum Regeln einer Ausfahrposition des wenigstens einen Verschleißkörpers. Fig. 3 zeigt eine Ausführungsform eines Rollgangs 1 mit einer Regelung für die Zentrierung des Bandmaterials 4 auf dem Rollgang 1. Die Zentrierung des Bandmaterials 4 erfolgt durch die Verschleißkörper 6, die lateral, d.h. quer zur Transportrichtung des Bandmaterials 4 ausfahrbar sind. Da das Bandmaterial 4 lose auf den Rollen 2 aufliegt, lässt sich das Bandmaterial durch das Ausfahren der Verschleißkörper ohne weiteres lateral verschieben und insbesondere auf dem Rollgang 1 zentrieren. Hierzu weist die Vorrichtung einen Positionierungsantrieb 14 zum Ausfahren des wenigstens einen Verschleißkörpers bis zu einer Ausfahrposition auf. In einer Ausführungsform der erfindungsgemäßen Vorrichtung ist die Führungsgröße eine Kraft, mit der der Verschleißkörper 6 gegen das Bandmaterial 4 auf dem Rollgang 1 gedrückt wird. Indem die Kraft erfasst wird, kann das Bandmaterial 4 in einer einmal vorgegebenen Position auf dem Rollgang 1 gehalten werden.

In einer bevorzugten, besonders praxistauglichen Ausführungsform wird der mindestens eine Verschleißkörper in Wirkverbindung gemeinsam mit den Seitenführungselementen in die Ausfahrposition verfahren.

Alternativ kann die Positionierungsreglereinrichtung 9 als Führungsgröße die Vorgabe einer lateralen Position einlesen. Dazu umfasst die Vorrichtung einen Sensor 10 für eine laterale Position des Bandmaterials auf dem Rollgang.

Als Positionierungsantrieb wird vorzugsweise ein hydraulischer Antrieb eingesetzt.

Die Regelung der lateralen Position des Bandmaterials 4 auf dem Rollgang 1 ist in Fig. 4 zusammengefasst. Der Regler 9 bestimmt den Hydraulikdruck eines Druckgebers 12 für den Hydraulikantrieb. Der Druckgeber 12 stellt damit das Stellglied bzw. die Regelstrecke des Regelkreises für die Regelung der Position de rotierenden Verschleißkörpers 6 quer zur Transportrichtung des Bandmaterials auf der Transportvorrichtung dar. Die tatsächliche laterale Position des Bandes auf dem Rollgang wird von dem Druckgeber 12 berücksichtigt. Je nach dieser Bandposition gibt der Druckgeber 12 ein Korrektursignal zur Druckänderung aus.

Die Regelungen der Vorrichtung werden vorzugsweise um eine nicht dargestellte Wartungsprognoseeinrichtung erweitert, die in Abhängigkeit von einem vorherigen Wartungstermin und von Ereignissen seit dem vorherigen Wartungstermin einen voraussichtlichen nächsten Wartungstermin anzeigt.

Das erfindungsgemäße Verfahren zum Transportieren von Bandmaterial wird nachfolgend unter Bezugnahme auf die Figuren näher beschrieben:
Das Verfahren sieht zunächst den Transport des Bandmaterials über die Transportvorrichtung 1 mit Seitenführungselementen 5 an den Seiten der Transportvorrichtung vor. Vorzugsweise sind die Seitenführungselemente an beiden Seiten der Transportvorrichtung angeordnet, wenigstens aber an einer Seite der Transportvorrichtung. Auf der Transportvorrichtung wird das Bandmaterial über eine vorbestimmte Strecke z.B. zum Haspel transportiert.

Um den Verschleiß an den Seitenführungselementen durch die Reibung des Bandmaterials zu verringern, sind Verschleißkörper 6 an jedem Seitenführungselement 5 vorgesehen, die um eine quer zur Transportrichtung stehende Achse gedreht werden. Dazu sind die Verschleißkörper an dem Seitenführungselement jeweils mit einem Rotationsantrieb 13 ausgestattet. Die Solldrehzahl des Rotationsantriebs 13 ist regelbar und wird durch die Drehzahlreglereinrichtung 7 vorgegeben. Statt direkt die Solldrehzahl vorzugeben kann die Drehzahlreglereinrichtung 7 auch die Drehzahländerung ermitteln, die erforderlich ist, um auf die Solldrehzahl zu kommen. Die berechnete Solldrehzahl bzw. die Änderung der momentanen Drehzahl wird bei dem Rotationsantrieb 13 eingestellt.

Die Solldrehzahl der Verschließkörper hängt von der Vortriebsgeschwindigkeit des Bandmaterials auf der Transportvorrichtung ab. Bei der Einstellung der Solldrehzahl des Rotationsantriebs 13 durch die Drehzahlreglereinrichtung 7 kann als Führungsgröße der Drehzahlreglereinrichtung die Vortriebsgeschwindigkeit des Bandmaterials oder die Rollendrehgeschwindigkeit des Rollgangs dienen. Alternativ kann als Führungsgröße der Drehzahlreglereinrichtung 7 die Kontaktzeit je Fläche mit dem Bandmaterial dienen. Damit wird sichergestellt, dass die Verschleißkörper 6 nicht zu sehr durch das Bandmaterial aufgeheizt werden. Als weitere Alternative kann als Führungsgröße der Drehzahlreglereinrichtung 7 auch der Rückzug in dem Bandmaterial dienen. Damit lässt sich insbesondere die Wickelqualität am Bandende auf dem Haspel überwachen.

Mit der Regelung der Solldrehzahl der Verschleißkörper lassen sich auch Bandkantenbeschädigungen beim Transport des Bandmaterials minimieren. Dazu wird die Umfangsgeschwindigkeit des Verschleißkörpers bzw. der Verschleißkörper 6 in Abhängigkeit von der Vortriebsgeschwindigkeit des Bandmaterials auf der Transportvorrichtung 1 derart eingeregelt, dass die Umfangsgeschwindigkeit dabei kleiner oder gleich der Vortriebsgeschwindigkeit des Bandmaterials auf der Transportvorrichtung 1 ist. Mit der von der Vortriebsgeschwindigkeit des Bandmaterials abhängigen Umfangsgeschwindigkeit der Verschleißkörper ergibt sich als Winkelgeschwindigkeit der Verschleißkörper eine Drehzahl in der Größenordnung von 0,5 bis 10 Umdrehungen pro Minute. Vorzugsweise wird die Drehzahl auf 0,5 bis 5 Umdrehungen pro Minute eingeregelt.

Da die Verschleißkörper 6 erfindungsgemäß in und entgegen der Richtung ihrer Rotationsachse ausfahrbar sind, kann ihre Ausfahrposition durch eine Positionsreglereinrichtung 9 auf eine vorbestimmte Sollposition eingeregelt werden. Das Ausfahren des Verschleißkörpers quer zu der Transportrichtung in die Sollposition erfolgt dabei durch den Positionierungsantrieb 14 des Verschleißkörpers 6. Bei der Regelung der Sollposition des Verschleißkörpers wird als Führungsgröße der Positionsreglereinrichtung die Kraft erfasst, mit der der wenigstens eine Verschleißkörper 6 gegen das Bandmaterial auf der Transportvorrichtung 1 gedrückt wird. Alternativ kann die laterale Position des Bandmaterials 10 durch einen Sensor erfasst werden, so dass als Führungsgröße der Positionsreglereinrichtung eine Sollposition für das Bandmaterial auf der Transportvorrichtung dient.

### Bezugszeichen

- 1: Rollgang
- 2: Rolle
- 3: Rollenantrieb
- 4: Bandmaterial
- 5: Seitenführungselement
- 6: rotierender Verschleißkörper
- 7: Drehzahlregler Verschleißkörper
- 8: Sensor Rollengeschwindigkeit
- 9: Positionsregler Verschleißkörper
- 10: Sensor Sollposition von Bandmaterial
- 11: Stromversorgung Rollenantrieb
- 12: Druckgeber Hydraulikantrieb
- 13: Rotationsantrieb
- 14: Positionierungsantrieb

## Patentansprüche

1. Vorrichtung zum Transportieren von Bandmaterial, insbesondere Warmband, umfassend:
- eine Transportvorrichtung (1) zum Transportieren des Bandmaterials in einer vorbestimmten Transportrichtung über eine vorbestimmte Strecke, wobei die Transportvorrichtung (1) für das Bandmaterial einen Rollgang mit Rollen (2) umfasst,
- Seitenführungselemente (5), die an mindestens einer Seite der Transportvorrichtung (1) angeordnet sind,
- zumindest einen rotierenden Verschleißkörper (6) an jedem Seitenführungselement (5), wobei der Verschleißkörper (6) um eine quer zur Transportrichtung stehende Achse drehbar gelagert ist, und
- einen Rotationsantrieb (13) zum Drehen des zumindest einen Verschleißkörpers um die Achse,
**gekennzeichnet durch**
eine Drehzahlreglereinrichtung (7) zum Regeln der Drehzahl des wenigstens einen Verschleißkörpers auf eine vorbestimmte Solldrehzahl, wobei die Drehzahlreglereinrichtung (7) so eingerichtet ist, dass der zumindest eine Verschleißkörper (6) kontinuierlich gedreht wird und die Umfangsgeschwindigkeit des wenigstens einen Verschleißkörpers (6) kleiner als die Vortriebsgeschwindigkeit des Bandmaterials auf der Transportvorrichtung (1) ist, wobei
ein Sensor für die Vortriebsgeschwindigkeit des Bandmaterials auf dem Rollgang oder für die dazu proportionale Rollendrehgeschwindigkeit vorgesehen ist und die Führungsgröße der Drehzahlreglereinrichtung (7) die Vortriebsgeschwindigkeit bzw. die Rollendrehgeschwindigkeit ist; oder
die Drehzahlreglereinrichtung (7) so eingerichtet ist, dass deren Führungsgröße eine Kontaktzeit je Fläche mit dem Bandmaterial ist.

2. Vorrichtung nach Anspruch 1, bei der die Drehzahlreglereinrichtung (7) so eingerichtet ist, dass die Winkelgeschwindigkeit der Verschleißkörper (6) in der Größenordnung von 0,5 bis 10 Umdrehungen pro Minute liegt, vorzugsweise in der Größenordnung von 0,5 bis 5 Umdrehungen pro Minute.

3. Vorrichtung nach einem der vorangehenden Ansprüche mit
- einer Positionsreglereinrichtung (9) zum Regeln der Ausfahrposition des wenigstens einen Verschleißkörpers (6) auf eine vorbestimmte Sollposition und
- einem Positionierungsantrieb (14) zum Ausfahren des wenigstens einen Verschleißkörpers quer zu der Transportrichtung in die Sollposition.

4. Vorrichtung nach Anspruch 3, bei der die Positionsreglereinrichtung (9) so eingerichtet ist, dass deren Führungsgröße eine Kraft ist, mit der der wenigstens eine Verschleißkörper (6) gegen das Bandmaterial auf der Transportvorrichtung (1) gedrückt wird.

5. Vorrichtung nach Anspruch 3, die einen Sensor für eine laterale Position des Bandmaterials umfasst und bei der die Führungsgröße der Positionsreglereinrichtung eine Sollposition für das Bandmaterial auf der Transportvorrichtung ist.

6. Vorrichtung nach einem der vorangehenden Ansprüche, bei der der Rotationsantrieb für den wenigstens einen Verschleißkörper ein Elektromotor ist.

7. Vorrichtung nach einem der Ansprüche 3 bis 6, bei der der Positionierungsantrieb ein hydraulischer Antrieb ist.

8. Vorrichtung nach einem der vorangehenden Ansprüche, bei der eine Wartungsprognoseeinrichtung in Abhängigkeit von einem vorherigen Wartungstermin und von Ereignissen seit dem vorherigen Wartungstermin einen voraussichtlichen nächsten Wartungstermin anzeigt.

9. Verfahren zum Transportieren von Bandmaterial, umfassend die Schritte:
- Transportieren des Bandmaterials über eine Transportvorrichtung (1) mit Seitenführungselementen (5) an wenigstens einer Seite der Transportvorrichtung über eine vorbestimmte Strecke, wobei die Transportvorrichtung (1) für das Bandmaterial einen Rollgang mit Rollen (2) umfasst,
- Drehen von wenigstens einem Verschleißkörper (6) an jedem Seitenführungselement (5) um eine quer zur Transportrichtung stehende Achse mit einem Rotationsantrieb (13),
- Berechnen einer Solldrehzahl oder einer Drehzahländerung auf eine bestimmte Solldrehzahl des wenigstens einen Verschleißkörpers (6) durch eine Drehzahlreglereinrichtung (7),
- Einstellen der berechneten Solldrehzahl oder deren Änderung bei dem Rotationsantrieb (13), wobei
der wenigstens eine Verschleißkörper (6) kontinuierlich gedreht wird und die Umfangsgeschwindigkeit des wenigstens einen Verschleißkörpers (6) kleiner als die Vortriebsgeschwindigkeit des Bandmaterials auf der Transportvorrichtung (1) ist, wobei
eine Führungsgröße der Drehzahlreglereinrichtung (7) die Vortriebsgeschwindigkeit des Bandmaterials oder die Rollendrehgeschwindigkeit des Rollgangs ist, oder
die Führungsgröße der Drehzahlreglereinrichtung (7) eine Kontaktzeit je Fläche mit dem Bandmaterial ist.

10. Verfahren nach Anspruch 9, bei dem die Winkelgeschwindigkeit der Verschleißkörper (6) in der Größenordnung von 0,5 bis 10 Umdrehungen pro Minute liegt, vorzugsweise in der Größenordnung von 0,5 bis 5 Umdrehungen pro Minute.

11. Verfahren nach Anspruch 9 oder 10 mit den Schritten
- Regeln der Ausfahrposition des wenigstens einen Verschleißkörpers (6) auf eine vorbestimmte Sollposition durch eine Positionsreglereinrichtung (9) und
- Ausfahren des wenigstens einen Verschleißkörpers quer zu der Transportrichtung in die Sollposition durch einen Positionierungsantrieb (14).

12. Verfahren nach Anspruch 11, bei dem die Führungsgröße der Positionsreglereinrichtung eine Kraft ist, mit der der wenigstens eine Verschleißkörper (6) gegen das Bandmaterial auf der Transportvorrichtung (1) gedrückt wird.

13. Verfahren nach Anspruch 11, bei dem eine laterale Position des Bandmaterials durch einen Sensor erfasst wird und die Führungsgröße der Positionsreglereinrichtung eine Sollposition für das Bandmaterial auf der Transportvorrichtung ist.

14. Verfahren nach einem der Ansprüche 9 bis 13, bei dem eine Wartungsprognoseeinrichtung in Abhängigkeit von einem vorherigen Wartungstermin und von Ereignissen seit dem vorherigen Wartungstermin einen voraussichtlichen nächsten Wartungstermin anzeigt.

## Claims

1. Device for transporting strip material, particularly hot strip, comprising:
- a transport device (1) for transporting the strip material in a predetermined transport direction over a predetermined path, wherein the transport device (1) for the strip material comprises a roller path with rollers (2),
- lateral guide elements (5) arranged at at least at one side of the transport device (1),
- at least one rotating wear body (6) at each lateral guide element (5), wherein the wear body (6) is mounted to be rotatable about an axis transverse to the transport direction, and
- a rotation drive (13) for rotating the at least one wear body about the axis,
**characterised by**
a rotational speed regulator device (7) for regulating the rotational speed of the at least one wear body to a predetermined target rotational speed, wherein
the rotational speed regulator device (7) is so arranged that the at least one wear body (6) is rotated continuously and the circumferential speed of the at least one wear body (6) is less than the speed of advance of the strip material on the transport device (1), wherein
a sensor for the speed of advance of the strip material on the roller path or for the roller rotational speed proportional thereto is provided and the reference variable of the rotational speed regulator device (7) is the speed of advance or speed of roller rotation, or
the rotational speed regulator device (7) is so arranged that the reference variable thereof is a contact time per area with the strip material.

2. Device according to claim 1, in which the rotational speed regulator device (7) is so arranged that the angular speed of the wear body (6) lies in the order of magnitude of 0.5 to 10 revolutions per minute, preferably in the order of magnitude of 0.5 to 5 revolutions per minute.

3. Device according to one of the preceding claims with
- a position regulator device (9) for regulating the move-out position of the at least one wear body (6) to a predetermined target position and
- a positioning drive (14) for moving the at least one wear body transversely to the transport direction out into the target position.

4. Device according to claim 3, in which the position regulator device (9) is so arranged that the reference variable thereof is a force by which the at least one wear body (6) is urged against the strip material on the transport device (1).

5. Device according to claim 3, which comprises a sensor for a lateral position of the strip material and in which the reference variable of the position regulator device is a target position for the strip material on the transport device.

6. Device according to any one of the preceding claims, in which the rotation drive for the at least one wear body is an electric motor.

7. Device according to any one of claims 3 to 6, in which the positioning drive is a hydraulic drive.

8. Device according to any one of the preceding claims, in which a maintenance prognosis device indicates an expected next maintenance term in dependence on a previous maintenance term and on events since the previous maintenance term.

9. Method of transporting strip material, comprising the steps:
- transporting the strip material by way of a transport device (1) with lateral guide elements (5) at at least one side of the transport device over a predetermined path, wherein the transport device (1) comprises for the strip material a roller path with rollers (2),
- rotation of at least one wear body (6) at each lateral guide element (5) about an axis, which is transverse to the transport direction, by a rotation drive (13),
- calculation of a target rotational speed or a rotational speed change to a defined target rotational speed of the at least one wear body (6) by a rotational speed regulator device (7),
- setting the calculated target rotational speed or the change thereof at the rotation drive (13), wherein
the at least one wear body (6) is rotated continuously and the circumferential speed of the at least one wear body (6) is less than the speed of advance of the strip material on the
transport device (1), wherein
a reference variable of the rotational speed regulator device (7) is the speed of advance of the strip material or the roller rotational speed of the roller path or
the reference variable of the of the rotational speed regulator device (7) is a contact time per area with the strip material.

10. Method according to claim 9, in which the angular speed of the wear body (6) lies in the order of magnitude of 0.5 to 10 revolutions per minute, preferably in the order of magnitude of 0.5 to 5 revolutions per minute.

11. Method according to claim 9 or 10, comprising the steps
- regulating the move-out position of the at least one wear body (6) to a predetermined target position by a position regulator device (9) and
- moving the at least one wear body transversely to the transport direction out into the target position by a positioning drive (14).

12. Method according to claim 11, in which the reference variable of the position regulator device is a force by which the at least one wear body (6) is urged against the strip material on the transport device (1).

13. Method according to claim 11, in which a lateral position of the strip material is detected by a sensor and the reference variable of the position regulator device is a target position for the strip material on the transport device.

14. Method according to any one of claims 9 to 13, in which a maintenance prognosis device indicates an expected next maintenance term in dependence on a previous maintenance term and on events since the previous maintenance term.

## Revendications

1. Dispositif de transport de matériau en bande, en particulier de bande laminée à chaud, comprenant :
- un dispositif de transport (1) permettant d'acheminer le matériau en bande dans une direction de transport prédéterminée sur une distance prédéterminée, le dispositif de transport (1) comprenant un chemin de roulement avec des rouleaux (2) pour le matériau en bande,
- des éléments de guidage latéral (5) disposés sur au moins un côté du dispositif de transport (1),
- au moins un élément d'usure (6) rotatif sur chaque élément de guidage latéral (5), l'élément d'usure (6) étant monté rotatif autour d'un axe perpendiculaire à la direction de transport, et
- un entraînement rotatif (13) permettant de faire tourner l'au moins un élément d'usure autour de son axe,
**caractérisé par**
un dispositif de régulation de vitesse de rotation (7) permettant d'ajuster la vitesse de rotation de l'au moins un élément d'usure à une vitesse de consigne prédéterminée,
ledit dispositif de régulation de vitesse de rotation (7) étant configuré de sorte que l'au moins un élément d'usure (6) soit mis en rotation de façon continue et que la vitesse périphérique de l'au moins un élément d'usure (6) soit inférieure à la vitesse d'avancement du matériau en bande sur le dispositif de transport (1),
un capteur étant prévu pour mesurer la vitesse d'avancement du matériau en bande sur le chemin de roulement ou la vitesse de rotation des rouleaux qui lui est proportionnelle, la grandeur de commande du dispositif de régulation de vitesse de rotation (7) étant la vitesse d'avancement ou la vitesse de rotation des rouleaux ; ou le dispositif de régulation de vitesse de rotation (7) étant configuré de sorte que sa grandeur de commande soit un temps de contact par unité de surface avec le matériau en bande.

2. Dispositif selon la revendication 1, dans lequel le dispositif de régulation de vitesse de rotation (7) est configuré de sorte que la vitesse angulaire des éléments d'usure (6) soit de l'ordre de 0,5 à 10 tours par minute, de préférence de l'ordre de 0,5 à 5 tours par minute.

3. Dispositif selon l'une des revendications précédentes, comprenant
- un dispositif de régulation de position (9) permettant d'ajuster la position de déplacement de l'au moins un élément d'usure (6) à une position de consigne prédéterminée, et
- un entraînement de positionnement (14) permettant de déplacer l'au moins un élément d'usure transversalement à la direction de transport jusqu'à la position de consigne.

4. Dispositif selon la revendication 3, dans lequel le dispositif de régulation de position (9) est configuré de sorte que sa grandeur de commande soit une force avec laquelle l'au moins un élément d'usure (6) est pressé contre le matériau en bande sur le dispositif de transport (1).

5. Dispositif selon la revendication 3, comprenant un capteur de position latérale du matériau en bande, la grandeur de commande du dispositif de régulation de position étant une position de consigne pour le matériau en bande sur le dispositif de transport.

6. Dispositif selon l'une des revendications précédentes, dans lequel l'entraînement rotatif de l'au moins un élément d'usure est un moteur électrique.

7. Dispositif selon l'une des revendications 3 à 6, dans lequel l'entraînement de positionnement est un entraînement hydraulique.

8. Dispositif selon l'une des revendications précédentes, comprenant un dispositif de prévision de maintenance indiquant une date prévisionnelle de maintenance en fonction d'une date de maintenance précédente et d'événements survenus depuis cette dernière.

9. Procédé de transport de matériau en bande, comprenant les étapes suivantes :
- transport du matériau en bande sur un dispositif de transport (1) comprenant des éléments de guidage latéral (5) situés sur au moins un côté du dispositif de transport, ledit dispositif de transport (1) comprenant un chemin de roulement avec des rouleaux (2) pour le matériau en bande,
- rotation d'au moins un élément d'usure (6) sur chaque élément de guidage latéral (5) autour d'un axe perpendiculaire à la direction de transport au moyen d'un entraînement rotatif (13),
- calcul d'une vitesse de rotation de consigne ou d'une modification de vitesse de rotation jusqu'à une vitesse de consigne déterminée de l'au moins un élément d'usure (6) par un dispositif de régulation de vitesse de rotation (7),
- ajustement de la vitesse de rotation de consigne calculée ou de sa modification au niveau de l'entraînement rotatif (13),
l'au moins un élément d'usure (6) étant mis en rotation de façon continue et la vitesse périphérique de l'au moins un élément d'usure (6) étant inférieure à la vitesse d'avancement du matériau en bande sur le dispositif de transport (1),
une grandeur de commande du dispositif de régulation de vitesse de rotation (7) étant la vitesse d'avancement du matériau en bande ou la vitesse de rotation des rouleaux du chemin de roulement, ou encore
la grandeur de commande du dispositif de régulation de vitesse de rotation (7) étant un temps de contact par unité de surface avec le matériau en bande.

10. Procédé selon la revendication 9, dans lequel la vitesse angulaire des éléments d'usure (6) est de l'ordre de 0,5 à 10 tours par minute, de préférence de l'ordre de 0,5 à 5 tours par minute.

11. Procédé selon la revendication 9 ou 10, comprenant les étapes suivantes :
- régulation de la position de déplacement de l'au moins un élément d'usure (6) à une position de consigne prédéterminée par un dispositif de régulation de position (9), et
- déplacement de l'au moins un élément d'usure transversalement à la direction de transport jusqu'à la position de consigne au moyen d'un entraînement de positionnement (14).

12. Procédé selon la revendication 11, dans lequel la grandeur de commande du dispositif de régulation de position est une force avec laquelle l'au moins un élément d'usure (6) est pressé contre le matériau en bande sur le dispositif de transport (1).

13. Procédé selon la revendication 11, dans lequel un capteur détecte la position latérale du matériau en bande, et la grandeur de commande du dispositif de régulation de position est une position de consigne pour le matériau en bande sur le dispositif de transport.

14. Procédé selon l'une des revendications 9 à 13, comprenant un dispositif de prévision de maintenance indiquant une date prévisionnelle de maintenance en fonction d'une date de maintenance précédente et d'événements survenus depuis cette dernière.
